Europäisches Patentamt

European Patent Office

Office européen des brevets

(19)

(11) Veröffentlichungsnummer: **0 468 473 A1**

## (12) EUROPÄISCHE PATENTANMELDUNG

(21) Anmeldenummer: **91112414.7**

(51) Int. Cl.5: **F16K 5/16, F16K 5/02**

(22) Anmeldetag: **24.07.91**

(30) Priorität: **27.07.90 DE 9011113 U**

(43) Veröffentlichungstag der Anmeldung:
**29.01.92 Patentblatt 92/05**

(84) Benannte Vertragsstaaten:
**BE DE FR NL**

(71) Anmelder: **PAUL PLEIGER Maschinenfabrik GmbH & Co. KG**
**Postfach 32 63**
**W-5810 Witten 3 (Herbede)(DE)**

(72) Erfinder: **Szewczyk, Mattias, Dr.-Ing.**
**Borgäcker 3**
**W-5810 Witten 7(DE)**
Erfinder: **Benra, Friedrich-Karl, Dr.-Ing.**
**Helfkamp 55**
**W-5810 Witten 3(DE)**

(74) Vertreter: **Klingseisen, Franz, Dipl.-Ing. et al**
**Dr. F. Zumstein Dipl.-Ing. F. Klingseisen**
**Bräuhausstrasse 4**
**W-8000 München 2(DE)**

(54) **Absperrhahn.**

(57) Bei einem Absperrhahn, insbesondere für Brennerarmaturen, mit einem Gehäuse (1) und einem darin verdrehbar eingesetzten (2), kegelstumpfförmigen Küken, wobei eine Achse des Kükens sich durch eine gehäusefeste Haltescheibe (4) erstreckt und mit einer Einstellmutter (10) versehen ist, mittels der ein Lager zwischen Haltescheibe und Küken gehalten ist, wird zur Vermeidung des Klemmens des Kükens im Gehäuse bei höheren Temperaturen auf beiden Seiten der Haltescheibe (4) jeweils ein Lager vorgesehen und die Haltescheibe oder ein Teil von dieser relativ zum Gehäuse in Achsrichtung einstellbar am Gehäuse (1) angebracht.

Fig.2

EP 0 468 473 A1

Die Erfindung betrifft einen Absperrhahn nach dem Oberbegriff des Anspruchs 1. Derartige Absperrhähne werden in Brennerarmaturen für Kokereien eingesetzt und sie dienen als Abschluß für Gicht- und Koksgas bzw. Verbrennungsluft führende Leitungen.

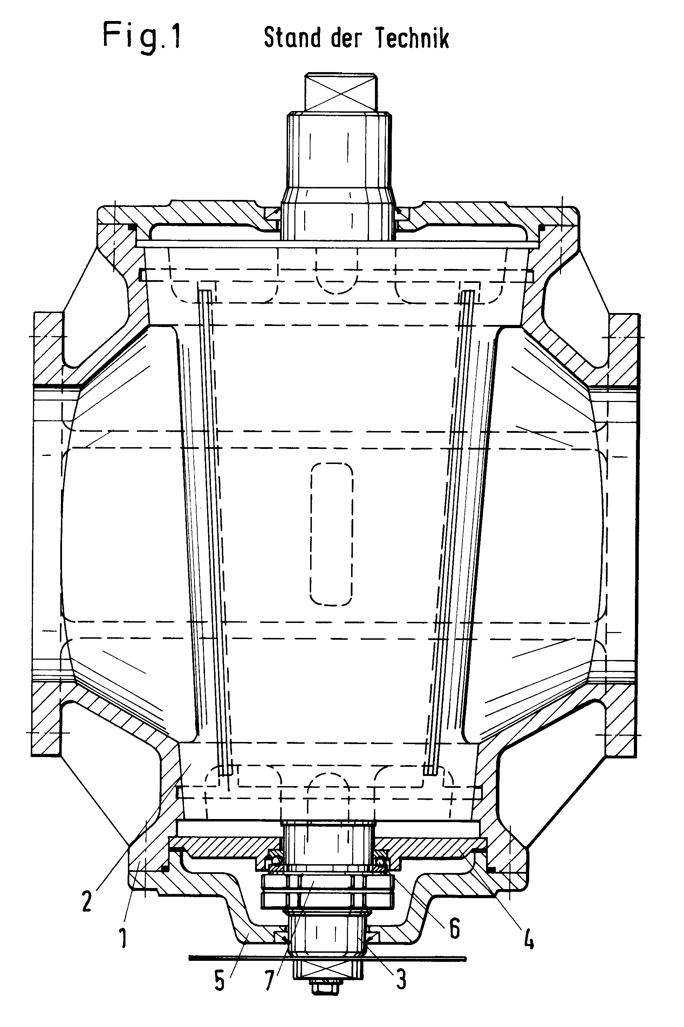

Fig. 1 zeigt einen Längsschnitt durch einen bekannten Absperrhahn mit einem zwischen zwei nicht dargestellte Leitungen einsetzbaren Gehäuse 1 und einem darin verdrehbar eingesetzten, kegelstumpfförmigen Küken 2, dessen Achse 3 auf der Seite mit kleinerem Kükendurchmesser sich durch eine Haltescheibe 4 erstreckt, die durch einen mit Schrauben befestigten Gehäusedeckel 5 am Gehäuse 1 festgelegt ist. Auf der Außenseite der Haltescheibe 4 ist in einen Absatz der mittigen Bohrung ein Rillenkugellager bzw. Axiallager 6 eingesetzt, an dessen äußerem Lagerring eine Einstellmutter 7 anliegt, die auf die Achse 3 des Kükens 2 aufgeschraubt und durch eine Kontermutter gesichert ist.

Durch die Einstellmutter 7 wird der Spalt zwischen Küken 2 und Gehäuse 1 festgelegt, jedoch kann sich das Küken in Fig. 1 nach unten relativ zum Gehäuse 1 verschieben, wenn sich das Gehäuse durch Erwärmung ausdehnt, so daß das Küken im Gehäuse klemmt. Ein Absperrhahn nach Fig. 1 kann deswegen nur für Temperaturen bis maximal 40° eingesetzt werden.

Der Erfindung liegt die Aufgabe zugrunde, einen Absperrhahn der eingangs angegebenen Art so auszubilden, daß er auch für höhere Temperaturen eingesetzt werden kann, ohne daß das Küken im Gehäuse klemmt.

Diese Aufgabe wird erfindungsgemäß durch die Merkmale im Kennzeichen des Anspruchs 1 gelöst. Durch jeweils ein Lager auf beiden Seiten der Haltescheibe wird das Küken im Gehäuse so fixiert, daß es relativ zum Gehäuse festliegt und nicht weiter in das Gehäuse eintauchen kann, während durch die Einstellmöglichkeit der Lager an der Haltescheibe der erforderliche Spalt zwischen Küken und Gehäuse festgelegt werden kann. Damit kann ein Absperrhahn dieser Art auch ohne weiteres bei höheren Temperaturen eingesetzt werden, weil durch die Festlegung des Kükens relativ zum Gehäuse ein Klemmen durch temperaturbedingte Ausdehnung des Gehäuses ausgeschlossen wird.

Weitere Vorteile der Erfindung sind in der nachfolgenden Beschreibung und in den weiteren Ansprüchen angegeben.

Die Erfindung wird nachfolgend anhand der Zeichnung näher erläutert. Es zeigen

Fig. 1    einen Längsschnitt durch einen bekannten Absperrhahn,

Fig. 2    einen Teilschnitt durch einen Absperrhahn nach der Erfindung, und

Fig. 3    eine Schnittansicht einer abgewandelten Ausführungsform nach der Erfindung.

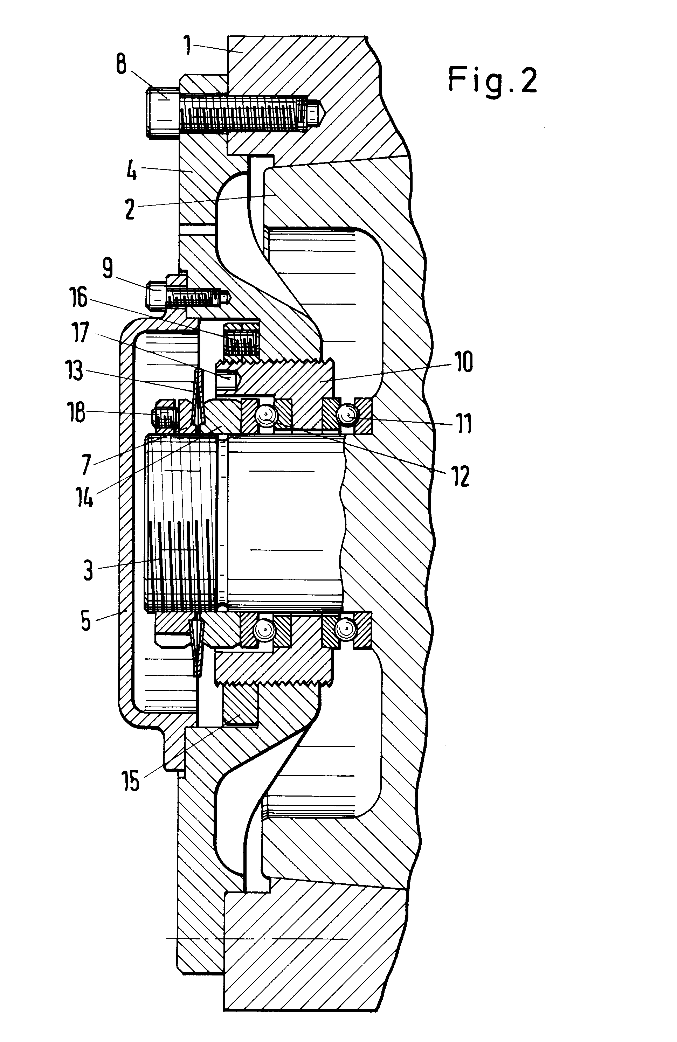

In Fig. 2 sind für gleiche bzw. entsprechende Bauteile die gleichen Bezugszeichen verwendet wie in Fig. 1.

Die Haltescheibe 4 ist mittels von außen zugänglicher Schrauben 8 direkt am Gehäuse 1 festgelegt, während der Gehäusedeckel 5 mittels Schrauben 9 an der Haltescheibe 4 befestigt ist. In die Haltescheibe 4 ist eine Stellhülse 10 eingeschraubt, durch die sich die Achse 3 des Kükens 2 unter Bildung eines Ringspaltes nach außen erstreckt. Auf einem radial nach innen vorstehenden Absatz der Stellhülse 10 liegt auf der Innenseite ein Rillenkugellager 11 an, dessen innerer Lagerring direkt am Küken 2 anliegt, während der äußere Lagerring mit Spiel relativ zur Achse 3 an der Stellhülse 10 anliegt. Auf der gegenüberliegenden Außenseite des Absatzes an der Stellhülse 10 ist ein weiteres Rillenkugellager 12 so angeordnet, daß der an der Stellhülse 10 anliegende innere Lagerring Spiel relativ zur Achse 3 des Kükens hat, während der äußere Lagerring auf der Achse 3 des Kükens aufgesetzt ist. Das äußere Rillenkugellager 12 wird durch eine auf die Achse 3 aufgeschraubte Einstellmutter 7 an der Stellhülse 10 anliegend gehalten, wobei bei dem dargestellten Ausführungsbeispiel nach Fig. 2 zwischen Einstellmutter 7 und Lager 12 eine Tellerfeder 13 und ein Zwischenring 14 angeordnet sind.

Das zwischen Küken 2 und Gehäuse 1 erforderliche Spiel wird dadurch eingestellt, daß zunächst die Stellhülse 10 relativ zur gehäusefesten Haltescheibe 4 entsprechend eingestellt wird, wobei das innere Lager 11 entsprechend fixiert wird, worauf durch die Einstellmutter 7 das äußere Lager 12 an der Stellhülse 10 festgelegt wird. Die Stellhülse 10 ist durch einen auf deren Außenumfang aufgeschraubten Gewindering 15 an der Haltescheibe 4 festgelegt, wobei der Gewindering 15 durch eine Madenschraube 16 an der Haltescheibe 4 gesichert ist. Auf der äußeren Stirnfläche der Stellhülse 10 ist eine axiale Bohrung 17 oder eine entsprechende Ausnehmung für den Eingriff eines Verstellwerkzeuges angebracht. Die Einstellmutter 7 ist durch eine Madenschraube 18 gegen eine Relativverdrehung zur Achse 3 gesichert, durch die über einen Schlitz in Umfangsrichtung der Einstellmutter 7 eine Verspannung des Gewindeeingriffs hervorgerufen wird.

Nach Einstellung der beiden Lager 11, 12 ist das Küken 2 im Gehäuse 1 derart fixiert, daß das Küken nicht tiefer in das Gehäuse eintauchen und damit klemmen kann. Durch die Einstellmutter 7 wird das Küken gegen eine Bewegung nach rechts in Fig. 2 bzw. nach oben in Fig. 1 relativ zum Gehäuse 1 festgelegt, während durch die Stellhülse 10 und das Innenlager 11 eine Bewegung des Kükens 2 nach links in Fig. 2 bzw. nach unten in Fig. 1 verhindert wird.

Bei dem dargestellten Ausführungsbeispiel nach Fig. 2 wird durch die Tellerfeder 13 und einen vorgegebenen axialen Abstand zwischen Einstellmutter 7 und Zwischenring 14 eine Bewegung des Kükens nach rechts in Fig. 2 ermöglicht. Die Tellerfeder 13 kann an dieser Stelle auch entfallen. Sie kann auch auf der gegenüberliegenden Seite des Kükens 2 zwischen diesem und dem Gehäuse bzw. einem Gehäusedeckel vorgesehen werden.

Durch die beschriebene Kükeneinstellung ist auch bei Erwärmung durch höhere Temperaturen das Küken trotz Ausdehnung des Gehäuses fest fixiert und es bleibt das eingestellte Spiel zwischen Gehäuse und Küken definiert, so daß auch bei höheren Temperaturen keine Schwierigkeiten auftreten.

Es sind verschiedene Abwandlungen der beschriebenen Bauweise möglich. So könnte beispielsweise die Stellhülse 10 entfallen, so daß die beiden Lager 11, 12 unmittelbar an einem Absatz der Haltescheibe 4 anliegen, während die Haltescheibe 4 selbst relativ zum Gehäuse 1 über einen Gewindeabschnitt auf dem Außenumfang verstellbar ist. In diesem Falle würde der Gehäusedeckel 5 größer ausgebildet werden und die Haltescheibe 4 überdecken, wie dies auch bei der Bauweise nach Fig. 1 der Fall ist.

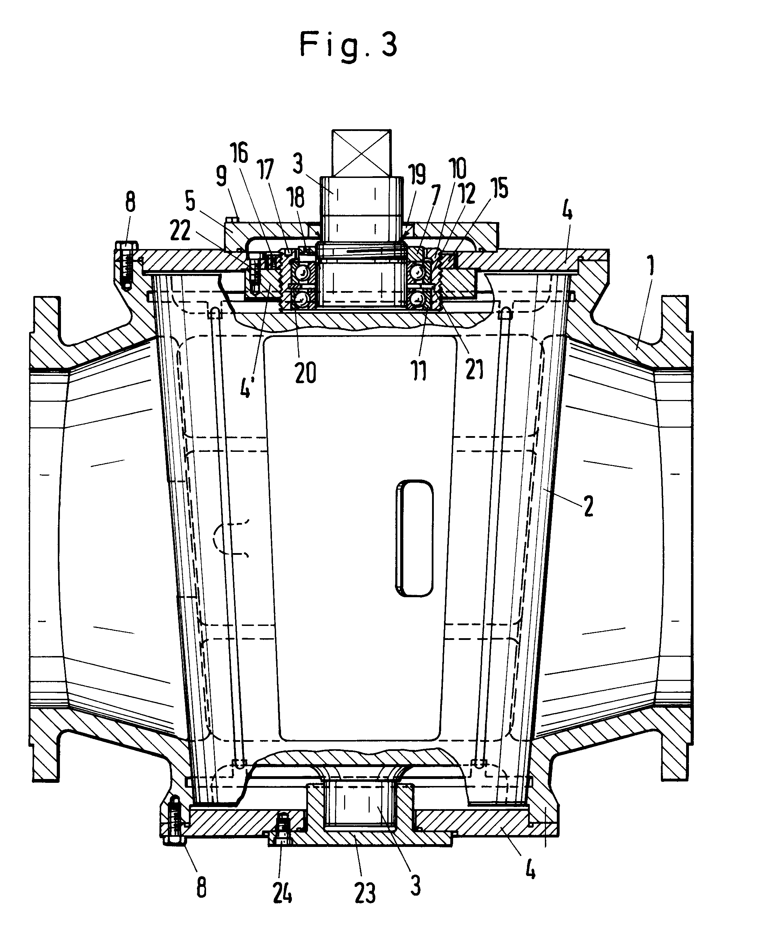

Die Ausführungsform nach Fig. 2 ist am unteren Ende des Kükens 2 wie bei der Darstellung nach Fig. 1 vorgesehen. Fig. 3 zeigt die erfindungsgemäße Anordnung an der Oberseite des Kükens 2 bzw. auf der Seite des Kükens mit größerem Durchmesser, wobei in Fig. 3 die gleichen Bezugszeichen wie in Fig. 2 für die gleichen bzw. entsprechenden Bauteile verwendet sind.

In Fig. 3 ist das untere Ende der Achse 3 in einer Lagerbuchse 23 drehbar eingesetzt, die über einen Flansch und darauf angebrachten Schrauben 24 mit der Haltescheibe 4 fest verbunden ist. An der Oberseite erstreckt sich das obere Ende der Achse 3 durch die Haltescheibe 4 hindurch, die bei diesem Ausführungsbeispiel mit einem Ring 4' mittels Schrauben 22 fest verbunden ist. Der Ring 4' bildet einen Teil der Haltescheibe 4 und ist auf dem Innenumfang mit einem Gewinde versehen, mit dem das Gewinde auf dem Außenumfang der Stellhülse 10 in Eingriff steht, die durch den Gewindering 15 in ihrer Stellung relativ zur Haltescheibe 4 gesichert ist. Die Stellhülse 10 ist auf dem Innenumfang mit einer Ringnut 21 versehen, in der ein Federring 20 eingesetzt ist, auf dessen beiden Seiten die Lager 11 und 12 anliegen, die bei diesem Ausführungsbeispiel als Radialkugellager ausgebildet sind, deren äußerer Lagerring jeweils an dem Federring 20 anliegt, während der innere Lagerring auf der Achse 3 des Kükens 2 aufliegt. Der Federring 20 in Fig. 3 entspricht der Ringschulter auf dem Innenumfang der Stellhülse 10 nach Fig. 2.

Bei der Ausführungsform nach Fig. 3 liegt die Einstellmutter 7 unmittelbar am inneren Lagerring des äußeren Lagers 12 an, so daß der Zwischenring 14 mit Tellerfeder 13 nach Fig. 2 entfällt.

Der Gehäusedeckel 5' in Fig. 3 ist mit einem Dichtring 19 versehen, der auf dem Umfang der Achse 3 anliegt.

## Patentansprüche

1. Absperrhahn, insbesondere für Brennerarmaturen, mit einem Gehäuse und einem darin verdrehbar eingesetzten, kegelstumpfförmigen Küken, wobei eine Achse des Kükens sich durch eine gehäusefeste Haltescheibe erstreckt und mit einer Einstellmutter versehen ist, mittels der ein Lager zwischen Haltescheibe und Küken gehalten ist, dadurch gekennzeichnet, daß auf beiden Seiten der Haltescheibe (4) jeweils ein Lager (11, 12) vorgesehen und die Haltescheibe (4) oder ein Teil (10) von dieser relativ zum Gehäuse (1) in Achsrichtung einstellbar am Gehäuse angebracht ist.

2. Absperrhahn nach Anspruch 1, dadurch gekennzeichnet, daß in die am Gehäuse (1) mittels Schrauben (8) festgelegte Haltescheibe (4) eine Stellhülse (10) eingeschraubt ist, auf deren beiden Seiten die Lager (11, 12) anliegen.

3. Absperrhahn nach Anspruch 2, dadurch gekennzeichnet, daß zwischen Einstellmutter (7) und äußerem Lager (12) eine Feder (13) angeordnet ist.

4. Absperrhahn nach Anspruch 2, dadurch gekennzeichnet, daß die Stellhülse (10) über einen Gewindering (15) an der Haltescheibe (4) gesichert ist.

5. Absperrhahn nach Anspruch 2, dadurch gekennzeichnet, daß die Stellhülse (10) auf der äußeren Stirnseite mit Ausnehmungen (17) für den Eingriff eines Verstellwerkzeuges versehen ist.

6. Absperrhahn nach Anspruch 1, dadurch gekennzeichnet, daß ein Gehäusedeckel (5, 5') auf der Haltescheibe (4) mittels Schrauben (9) befestigt ist, der den Einstellbereich bzw. die Stellhülse (10) abdeckt.

7. Absperrhahn nach Anspruch 2, dadurch gekennzeichnet,

daß die Stellhülse (10) auf dem Innenumfang mit einer Ringschulter (20) für die Anlage der Lager (11, 12) versehen ist.

# Fig.1    Stand der Technik

Fig.2

# Fig. 3

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 524 104  (CLIFFORD) <br> * Spalte 4, Zeile 3 - Zeile 17; Abbildung 2 * * <br> – – – | 1 | F 16 K 5/16 <br> F 16 K 5/02 |
| A | GB-A-305 941  (PRÖSEL) <br> * Seite 1, Zeile 86 - Seite 2, Zeile 13; Anspruch 3; Abbildungen 1,2 * * <br> – – – | 1 | |
| A | US-A-2 398 444  (NORDSTROM) <br> * Seite 1, Spalte 2, Zeile 19 - Zeile 36; Abbildung 1 * * <br> – – – | 1 | |
| A | GB-A-1 375 076  (COUTU ET AL.) <br> – – – – – | | |

RECHERCHIERTE SACHGEBIETE (Int. Cl.5)

F 16 K

Der vorliegende Recherchenbericht wurde für alle Patentansprüche erstellt

| Recherchenort | Abschlußdatum der Recherche | Prüfer |
|---|---|---|
| Den Haag | 06 November 91 | CHRISTENSEN C.W. |